Europäisches Patentamt

European Patent Office

Office européen des brevets

(11) Publication number: **0 470 828 B1**

# EUROPEAN PATENT SPECIFICATION

(45) Date of publication of patent specification: **29.03.95** (51) Int. Cl.⁶: **D06M 15/564**, D06N 3/14, B32B 27/40

(21) Application number: **91307257.5**

(22) Date of filing: **07.08.91**

(54) Moisture-permeable waterproof fabric and process for production thereof.

(30) Priority: **07.08.90 JP 207564/90**

(43) Date of publication of application:
**12.02.92 Bulletin 92/07**

(45) Publication of the grant of the patent:
**29.03.95 Bulletin 95/13**

(84) Designated Contracting States:
**DE FR GB IT**

(56) References cited:
**US-A- 4 636 424**

**DERWENT ACCESSION NO. 86-268 040,
Ouestel Telesystems (WPIL), DERWENT-
PUBLICATIONS LTD., London**

**DERWENT ACCESSION NO. 90-095 340,
Ouestel Telesystems (WPIL), DERWENT-
PUBLICATIONS LTD., London**

**DERWENT ACCESSION NO. 87-166 456,
Ouestel Telesystems (WPIL), DERWENT-
PUBLICATION LTD., London**

(73) Proprietor: **TORAY INDUSTRIES, INC.
2-1, Nihonbashi Muromachi 2-chome
Chuo-ku
Tokyo (JP)**

(72) Inventor: **Zenda, Tatsuya
MA-128, Terai,
Terai-machi
Nomi-Gun,
Ishikawa (JP)**
Inventor: **Hayashi, Yutaka
RO-4-20, Hinomiko-Machi,
Tsurugi-Machi
Ishikawa-Gun,
Ishikawa (JP)**
Inventor: **Kitagawa, Motoaki
482, Koizumi-Cho
Hikone-Shi,
Shiga (JP)**
Inventor: **Seino, Takashi
1313-51, Mikumo,
Kousei-Cho
Kouga-Gun,
Shiga (JP)**

**DERWENT ACCESSION NO. 87-139 488,**
**Ouestel Telesystems (WPIL), DERWENT-**
**PUBLICATIONS LTD., London**

**DERWENT ACCESSION NO. 85-246 632,**
**Ouestel Telesystems (WPIL), DERWENT-**
**PUBLICATIONS LTD., London**

(74) Representative: **Coleiro, Raymond et al**
**MEWBURN ELLIS**
**York House**
**23 Kingsway**
**London WC2B 6HP (GB)**

**Description**

The present invention relates to a moisture-permeable waterproof fabric, and a process for the production thereof. More particularly, the present invention relates to a moisture-permeable waterproof fabric having a high moisture permeability and high waterproofness, and having an excellent abrasion resistance and an excellent washing fastness, and further, to a process for the production of this fabric.

As the conventional process for the production of a processed fabric having a moisture permeability and a waterproofness, for example, a process comprising coating a polyurethane on a fabric forming cells in the resin layer by wet coagulation is disclosed in Japanese Unexamined Patent Publication No. 58-144178. Futhermore, a process comprising laminating a fabric with a dry-coagulated polyurethane film is disclosed, for example, in Japanese Unexamined Patent Publication No. 58-203172.

Nevertheless, since the moisture permeability and the waterproofness are functions contradictory to each other, according to the above-mentioned conventional techniques using a polyurethane as the material, it is difficult to enhance both properties simultaneously. For example, when the moisture permeability is maintained at 4,000 g/m$^2$.24 hours, it has been impossible to obtain a processed fabric having a water pressure resistance higher than 2,000 mmH$_2$O.

As the means for overcoming this disadvantage, use of a film formed by wet-coagulating a polyamino acid-modified urethane is proposed, for example, in Japanese Unexamined Patent Publication No. 60-154054. According to this technique, a processed fabric having a moisture permeability of at least 7,000 g/m$^2$.24 hours and a water pressure resistance of at least 1,500 mmH$_2$O is obtained.

Nevertheless, the technique of using a resin layer composed of a polyamino acid-modified urethane is defective in that the abrasion resistance of the resin layer is poor and the washing fastness is extremely low. Namely, the waterproofness and the peel strength are immediately drastically degraded upon washing, and therefore, the processed fabric cannot be put to practical use.

Furthermore, there is known a technique of using a resin layer composed of a mixture of a polyamino acid-modified urethane and a polyurethane, but this technique is defective in that the abrasion resistance and washing fastness are poor. Namely, the waterproofness and peel strength are degraded, and the practical use of this processed fabric is difficult.

Therefore, the present invention seeks to provide a moisture-permeable waterproof fabric and a process for its production, by which a fabric may be obtained which has both an excellent moisture permeability and waterproofness, and further, an excellent abrasion resistance and washing fastness.

More specifically, in accordance with the present invention, there is provided a moisture-permeable waterproof fabric having a resin layer formed on at least one surface thereof, wherein the resin layer is composed of a mixture comprising (a) a resin product obtained by reacting a urethane prepolymer having isocyanate terminals with an N-carboxyamino acid anhydride and an amine, and (b) a polyurethane having a 100% modulus of at least 40 kg/cm$^2$, said resin layer being crosslinked by an isocyanate crosslinking agent, the amount of the resin product contained in the resin layer is 12.9 to 85.3% by weight of total solid resin, and the amount of the urethane/amino acid copolymer formed during the above reaction contained in the resin layer is 0.9 to 9.0% by weight of total solid resin.

Furthermore, according to the present invention, there is provided a process (A) for the production of a moisture-permeable waterproof fabric, which comprises (i) forming a solution of a mixture of (a) a polyurethane having a 100% modulus of at least 40 kg/cm$^2$, (b) a reaction product, obtained by reacting a urethane prepolymer having isocyanate terminals with an N-carboxy-amino acid anhydride and an amine, and (c) an isocyanate crosslinking agent having terminals not blocked, the proportional amounts of (a) and (b) being such that the amount of the reaction product (b) in the resulting mixed resin layer is 12.9 to 85.3% by weight of total solid resin and the amount of the urethane/amino acid copolymer produced during the above reaction contained in the resin layer is 0.9 to 9.0% by weight of total solid resin, (ii) coating the solution on at least one surface of a fabric, (iii) carrying out a coagulation, removal of the solvent and drying to form a mixed resin layer, and (iv) subjecting the fabric to a water repellent treatment. The solution of the mixture may be formed by mixing respective solutions of (a) and (b), each preferably in an organic solvent, and thereafter adding component (c).

Moreover, according to the present invention, there is provided a process (B) for the production of a moisture-permeable waterproof fabric, which comprises carrying out each of steps (i) to (iv) of process (A) above and additionally including the step (v) of coating an organic solvent solution of a polyurethane on the surface of the formed mixed resin layer, carrying out a coagulation, removal of the solvent and drying, the fabric preferably being subjected to the said water repellent treatment (iv) subsequent to step (v).

Synthetic fibers such as polyester fibers, polyamide fibers, acrylic fibers and rayon fibers, natural fibers such as cotton fibers and wool fibers, and mixtures of these fibers, are preferably used as the material of the starting fabric of the present invention.

The material of the resin layer used in the present invention is a mixture comprising a product obtained by reacting a urethane prepolymer having isocyanate terminals with an N-carboxyamino acid anhydride and an amine, and a polyurethane having a 100% modulus of at least 40 kg/cm$^2$, and the amount of the resin product is from 12.9 to 85.3%, preferably 20.0 to 72.4% by weight of total solid resin. For a clothing fabric, to obtain a good touch and feel, preferably this amount is from 58.5 to 72.4% by weight.

If this amount is lower than 12.9% by weight, cells of the resin layer formed by wet coagulation become too large and few fine cells are formed, and therefore, the moisture permeability intended in the present invention cannot be obtained. If this amount is higher than 85.3% by weight, many fine cells are formed in the resin layer obtained by wet coagulation, and therefore, the water pressure resistance, peel strength and washing fastness become poor.

As the method of obtaining a reaction product by reacting a urethane prepolymer having isocyanate terminals with an N-carboxyamino acid anhydride and an amine, there can be mentioned, for example, a method in which an N-carboxyamino acid anhydride (hereinafter referred to as "NCA") is mixed with a urethane prepolymer having isocyanate terminals, an amine is then added to the mixture and a reaction is carried out, and a method in which a urethane prepolymer having isocyanate terminals is reacted with an amine and the reaction product is further reacted with NCA. In view of the solubilities of the starting materials and product, preferably dimethylformamide is used as the reaction solvent.

N-carboxyamino acid anhydrides of $\alpha$-amino acids such as glutamic acid, aspartic acid, lysine, arginine, alanine and methionine, and alkyl esters thereof may be used as the NCA, and preferred are glutamic acid, aspartic acid, lysine, arginine, methionine and alkyl esters thereof.

The urethane prepolymer having isocyanate terminals is obtained by a reaction of an excess amount of a diisocyanate compound with a diol compound. Tolylene diisocyanate, diphenylmethane diisocyanate and isophorone diisocyanate can be used as the diisocyanate compound, and polyether glycols such as polyethylene glycol and polypropylene glycol and polyester glycols such as polycaprolactone glycol can be used as the diol compound.

As the amine, there can be used primary amines such as hydrazine, ethylenediamine and propanediamine, secondary amines such as dialkylamines, thertiary amines such as trialkylamines, and alcohol amines.

Since the reaction is a competitive reaction comprising three kinds of polymerization reactions, the obtained reaction product is a mixture of three polymers, i.e., a urethane/amino acid copolymer, a polyurethane and a polyamino acid. The mixing ratio of these polymers can be controlled, for example, by changing the charge ratio of the starting NCA, isocyanate terminal-containing urethane prepolymer and amine.

In the present invention, to maintain the resin solution in a stable condition, preferably the proportion of the urethane/amino acid copolymer occupying the reaction product is not larger than 20% by weight of total solid, more preferably no larger than 15% by weight.

A polyurethane having a 100% modulus of at least 40 kg/cm$^2$ is selected as the polyurethane to be used in the present invention. If the 100% modulus is lower than 40 kg/cm$^2$, the water pressure resistance and peel strength are too low.

An isocyanate crosslinking agent may be further incorporated in the mixed resin solution of the urethane/amino acid copolymer and the polyurethane in the present invention.

If the isocyanate crosslinking agent is not incorporated, the peel strength may be low. The content of the crosslinking agent is preferably 0.5 to 10% by weight.

In the present invention, an isocyanate crosslinking agent having terminals not blocked is used as the isocyanate crosslinking agent. To prevent a decomposition by water, an isocyanate crosslinking agent having terminals blocked with phenol or methylethylketone oxime is generally used, and after the formation of a resin layer, the blocking is released by a heat treatment to effect a crosslinking reaction. In the process for producing a moisture-permeable waterproof fabric by using a polyamino acid/urethane resin (Japanese Unexamined Patent Publication No, 61-63777), it is taught that the isocyanate group may be free or blocked. Practically, however, although a product having a high peel strength is obtained with a free isocyanate group, a high-temperature heat treatment at a temperature higher than 150°C is necessary when a crosslinking agent blocked with phenol is used or a high-temperature heat treatment at a temperature higher than 170°C is required when a crosslinking agent blocked with methylethylketone oxime is used. Accordingly, a fine-cell structure formed by wet coagulation is destroyed or the bonding becomes uneven, because of an uneven dissociation of the blocks. According to the present invention, these problems are solved by using an isocyanate crosslinking agent having terminals not blocked. In the present invention, even if such an isocyanate type crosslinking agent is used, the problem of decomposition by water does not arise. This is considered to be because, since the isocyanate type crosslinking agent is oleophilic, the majority of the crosslinking agent is not decomposed even though a part of the crosslinking agent coming into contact with water is decomposed.

As the isocyanate crosslinking agent, there can be mentioned diisocyanates such as 2,4-tolylene diisocyanate, diphenylmethane diisocyanate, isophorone diisocyanate and hexamethylene diisocyanate, and triisocyanates formed by reacting these diisocyanates with active hydrogen-containing compounds.

To increase the moisture permeability and improve the strength of the resin layer, desirably the amount of the urethane/amino acid copolymer contained in the mixed resin layer is adjusted to 0.9 to 9.0% by weight, preferably 1.3 to 8.6% by weight.

In the present invention, additives such as pigments may be used. In this case, the amount of the additives are not considered in the calculation of the amount of reaction product contained in the resin layer.

In the present invention, the moisture permeability is the value as measured under conditions of a temperature of 40°C and relative humidity of 90% according to the cup method of JIS Z-0208. To reduce the stuffy feeling in a high-humidity environment, preferably the moisture permeability is higher than 8,000 $g/m^2$.24 hours.

In the present invention, the water pressure resistance is the value measured according to the high-pressure method of JIS L-1092. To prevent intrusion of rain water into the cloth on a rainy day, preferably the water pressure resistance is higher than 2,000 $mmH_2O$. Preferably, the retention ratio of the water pressure resistance after washing is at least 80%.

To maintain a comfortable moisture environment within the cloth, preferably the degree of increase of the moisture permeability with temperature is at least 200 $g/m^2$.24 hours.degree, most preferably at least 300 $g/m^2$.24 hours.degree.

The degree of increase of the moisture permeability with temperature, as referred to herein, is the value obtained by dividing the difference between the moisture permeability $P_{40}$ ($g/m^2$.24 hours) at a temperature of 40°C and a relative humidity of 90% and the moisture permeability $P_{25}$ ($g/m^2$.24 hours) at a temperature of 25°C and a relative humidity of 90% by the temperature difference (15°C). Note, the value determined by JIS Z-0208 is used as the moisture permeability.

As the value of the degree of increase of the moisture permeability with temperature is larger, an excellent moisture permeability is exerted under high-temperature and high-humidity conditions and a relatively low moisture permeability is obtained at a low temperature. Accordingly, the humidity environment within the cloth can be positively controlled.

The process for the production of the moisture-permeable processed fabric of the present invention will now be described.

Before the formation of a resin layer by a wet coagulation, to prevent an excessive intrusion of a resin solution into a fabric, a water repellent treatment and a calender treatment are preferably first carried out.

An organic solvent solution comprising a product obtained by reacting a urethane prepolymer having isocyanate terminals with an N-carboxyamino acid anhydride and an amine and a solution of a polyurethane having a 100% modulus of at least 40 $kg/cm^2$, the amount of the reaction product in the resin layer being 12.9 to 85.5% by weight, and further comprising an isocyanate crosslinking agent on at least one surface of a fabric, and a coagulation, removal of the solvent and drying are carried out. To maintain a high strength and a good touch and feel in the resin layer, the amount coated of the mixed resin after drying is preferably adjusted to 15 to 45 $g/m^2$.

To further improve the strength of the processed fabric, preferably a polyurethane layer is further formed on the thus-obtained layer, by a wet coagulation.

In view of the solubility of the mixed resin and the ease of coagulation and removal of the solvent, an organic solvent composed mainly of a polar organic solvent such as dimethylformamide (hereinafter referred to as "DMF"), dimethylacetamide or N-methylpyrrolidone is preferably used as the solvent for the mixed resin.

The coagulation and removal of the solvent can be accomplished by a known wet coagulation method. An aqueous solution of the solvent for the mixed resin or water is preferably used as the coagulation bath. To appropriately adjust the size of fine cells formed in the resin layer, the coagulation temperature is preferably controlled to 10 to 50°C. Water is preferably used for removal of the solvent, and the removal of the solvent is preferably carried out at a temperature of 10 to 80°C.

The solvent-removed fabric is then dried according to customary procedures, at a drying temperature of preferably 90 to 140°C.

The isocyanate crosslinking agent forms a crosslinking structure in the resin layer by a heat treatment conducted after the formation of the resin layer, and this crosslinking structure contributes to an improvement of the strength and durability.

After removal of the solvent and drying, a water repellent treatment is carried out for imparting a durable water repellency to the fabric. A known water repellent agent can be used for the water repellent treatment. To increase the grade of a fabric product, a finish setting treatment is preferably carried out.

The present invention will now be described in detail with reference to the following examples.

The moisture permeability, water pressure resistance, and peel strength were measured according to methods of JIS Z-0208, JIS L-1092, and JIS Z-1089, respectively.

Washing was carried out according to JIS K-3371. Namely, a 0.2% aqueous solution of Synthetic Detergent 251 (weakly alkaline; first class) maintained at 40 ± 2°C was charged in a household electric washing machine, and a test sample and an additional cloth in a total amount of about 500 g were washed for 25 minutes and rinsed for 10 minutes. These steps were repeated twice and the sample was naturally dried. These operations were regarded as one cycle of the washing.

Example 1

A polyester twill fabric (each of the warp and weft was a 100-denier/50 filament yarn; the warp density was 171 yarns per inch and the weft density was 84 yarns per inch) was padded with a 10% aqueous solution of a fluorine type water repellent agent (Asahi Guard AG710), dried and cured, and a filling-up was carried out by a plastocalender.

At 110°C, 246 parts by weight of polytermethylene ether glycol was reacted with 555 parts by weight of isophorone diisocyanate for 5 hours to obtain a urethane prepolymer having isocyanate groups at terminals (the isocyanate equivalent was 1230).

In 500g of dimethylformamide were dissolved 120 g of the urethane prepolymer and 12 g of NCA of $\gamma$-methyl-L-glutamate, 15 g of a 2% aqueous solution of hydrazine was added to the solution with stirring, and a reaction was carried out at 30°C for 2 hours to obtain an emulsion-like product solution having a viscosity of 4,000 cps at 30°C.

The flowability of this product solution was good, the solid concentration in the product solution was 20%, and the proportion of the urethane/amino acid copolymer in the solid was 10%.

A DMF solution of a mixed resin, which was prepared by mixing 80 parts by weight of the above-mentioned product solution, 20 parts by weight of a 30% DMF solution of a polyurethane resin having a 100% modulus of 60 kg/cm$^2$ (8166 supplied by Dainippon Ink), 20 parts by weight of DMF, 2 parts by weight of an isocyanate type crosslinking agent (Resamine NE supplied by Dainichi Seika) and 5 parts of a white pigment (L-1500 supplied by Dainippon Ink), was coated on the above-mentioned woven fabric at a slit width of 0.2 mm, and coagulation was conducted in a 15% aqueous solution of DMF for 5 minutes. Then, the solvent was removed by water at 25°C, and washing and drying were carried out. The fabric was treated with a fluorine type oily water repellent and subjected to finish setting at 150°C to obtain a coated fabric. The amount coated of the mixed resin was 27.5 g/m$^2$ after drying, the amount of the reaction product in the resin layer was 66.7% by weight, and the amount of the urethane/amino acid copolymer contained in the mixed resin layer was 6.7% by weight.

With respect to the obtained fabric, the moisture permeability, water pressure resistance, peel strength and degree of increase of the moisture permeability with temperature were measured, and the results are shown in Table 1.

Comparative Example 1

A coated fabric was prepared in the same manner as described in Example 1 except that a 30% DMF solution of a polyurethane resin having a 100% modulus of 30 kg/cm$^2$ (8006 supplied by Dainippon Ink) was used as the polyurethane and water was used as the coagulation bath. The amount coated of the mixed resin after drying was 28.0 g/m$^2$, the amount of the reaction product in the resin layer was 66.7% by weight and the amount of the urethane/amino acid copolymer contained in the mixed resin layer was 6.7% by weight.

With respect to this fabric, the moisture permeability, water pressure resistance, peel strength and degree of increase of the moisture permeability with temperature were measured, and the results are shown in Table 1.

Comparative Example 2

A coated fabric was prepared in the same manner as described in Example 1 except that a resin solution formed by mixing 100 parts by weight of the urethane/amino acid copolymer-containing reaction product solution prepared in Example 1, 20 parts by weight of DMF, 2 parts by weight of an isocyanate type crosslinking agent (Resamine NE supplied by Dainichi Seika) and 5 parts by weight of a white pigment (L-1500 supplied by Dainippon Ink) was used and water was used as the coagulation bath.

The amount coated of the resin after drying was 29.0 $g/m^2$, the amount of the reaction product in the resin layer was 90.9% by weight, and the amount of the urethane/amino acid copolymer contained in the mixed resin layer was 9.1% by weight.

With respect to this fabric, the moisture permeability, water pressure resistance, peel strength and degree of increase of the moisture permeability with temperature were measured, and the results are shown in Table 1.

Comparative Example 3

A coated fabric was prepared in the same manner as described in Example 1 except that 18 parts by weight of the urethane/amino acid copolymer-containing reaction product solution and 82 parts by weight of the polyurethane resin solution (8166) were used.

The amount coated of the resin was 25.5 $g/m^2$ after drying, the amount of the reaction product in the resin layer was 11.9% by weight, and the amount of the urethane/amino acid copolymer contained in the mixed resin layer was 1.2% by weight.

With respect to this fabric, the moisture permeability, water pressure resistance, peel strength and degree of increase of the moisture permeability with temperature were measured, and the results are shown in Table 1.

Comparative Example 4

A coated fabric was prepared in the same manner as described in Example 1 except that the urethane/amino acid copolymer-containing reaction product solution was not used and 100 parts by weight of the solution of the polyurethane resin having a 100% modulus of 60 $kg/cm^2$ (8166 supplied by Dainippon Ink) was used.

The amount coated of the resin was 28.5 $g/m^2$ after drying.

With respect to this fabric, the moisture permeability, water pressure resistance, peel strength and degree of increase of the moisture permeability with temperature were measured, and the results are shown in Table 1.

Comparative Example 5

A coated fabric was prepared in the same manner as described in Comparative Example 1 except that the isocyanate type crosslinking agent was not used.

The amount coated of the resin was 28.0 $g/m^2$ after drying.

With respect to this fabric, the moisture permeability, water pressure resistance, peel strength and degree of increase of the moisture permeability with temperature were measured, and the results are shown in Table 1.

Example 2

A coated fabric was prepared in the same manner as described in Example 1 except that the amounts of the urethane/amino acid copolymer-containing reaction product solution and the solution of the polyurethane having a 100% modulus of 60 $kg/cm^2$ (8166 supplied by Dainippon Ink) were changed to 70 parts by weight and 30 parts by weight, respectively.

The amount coated of the mixed resin was 29.0 $g/m^2$ after drying, the amount of the reaction product in the resin layer was 56.0% by weight, and the urethane/amino acid copolymer contained in the mixed resin layer was 5.6% by weight.

With respect to this fabric, the moisture permeabiltiy, water pressure resistance, peel strength and degree of increase of the moisture permeability were measured, and the results are shown in Table 2.

Example 3

A nylon twill fabric (each of the warp and weft was a 75-denier/36 filament yarn; the warp density was 133 yarns per inch; the weft density was 90 yarns per inch) was padded with a 10% aqueous solution of a fluorine type water repellent (Asahi Guard AG710), dried and cured, and the filling-up was carried out by using a plasto-calender.

Then, a coated fabric was prepared in the same manner as described in Example 1 except that a 30% DMF solution of a polyurethane resin having a 100% modulus of 90 kg/cm$^2$ (8616 supplied by Dainippon Ink) was used as the polyurethane and water as the coaguling bath.

The amount coated of the mixed resin was 28.5 g/m$^2$ after drying, the amount of the reaction product in the resin layer was 66.7% by weight, after drying, and the amount of the urethane/amino acid copolymer was 6.7% by weight.

With respect to the obtained fabric, the moisture permeability, water pressure resistance, peel strength and degree of increase of the moisture permeability with temperature were measured, and the results are shown in Table 2.

Example 4

A coated fabric was prepared in the same manner as described in Example 2 except that the amounts of the urethane/amino acid copolymer-containing reaction product solution and the solution of the polyurethane resin having a 100% modulus of 60 kg/cm$^2$ (8166 supplied by Dainippon Ink) were changed to 85 parts by weight and 15 parts by weight, respectively.

The amount coated of the mixed resin was 26.0 g/m$^2$ after drying, the amount of the reaction product in the resin layer was 72.3% by weight, and the amount of the urethane/amino acid copolymer contained in the mixed resin layer was 7.2% by weight.

With respect to this fabric, the moisture permeability, water pressure resistance, peel strength and degree increase of the moisture permeability with temperature were measured, and the results are shown in Table 2.

Example 5

A coated fabric was prepared in the same manner as described in Example 2 except that the amounts of the urethane/amino acid copolymer-containing reaction product solution and the solution of the polyurethane resin having a 100% modulus of 60 kg/cm$^2$ (8166 supplied by Dainippon Ink) were changed to 30 parts by weight and 70 parts by weight, respectively.

The amount coated of the mixed resin was 25.3 g/m$^2$ after drying, the amount of the reaction product in the resin layer was 20.7% by weight, and the amount of the urethane/amino acid copolymer contained in the mixed resin layer was 2.1% by weight.

With respect to this fabric, the moisture permeability, water pressure resistance, peel strength and degree of increase of the moisture permeability with temperature were measured, and the results are as shown in Table 2.

Example 6

A coated fabric was prepared in the same manner as described in Example 2 except that the amounts of the urethane/amino acid copolymer-containing reaction product solution and the solution of the polyurethane resin having a 100% modulus of 60 kg/cm$^2$ (8166 supplied by Dainippon Ink) were changed to 50 parts by weight and 50 parts by weight, respectively.

The amount coated of the mixed resin was 30.3 g/m$^2$ after drying, the amount of the reaction product in the resin layer was 37.0% by weight, and the amount of the urethane/amino acid copolymer contained in the mixed resin layer was 3.7% by weight.

With respect to this fabric, the moisture permeability, water pressure resistance, peel strength and degree of increase of the moisture permeability with temperature were measured, and the results are shown in Table 2.

Comparative Example 6

A coated fabric was prepared in the same manner as described in Example 2 except that the amounts of the urethane/amino acid copolymer-containing reaction product solution and the solution of the polyurethane resin having a 100% modulus of 60 kg/cm$^2$ (8166 supplied by Dainippon Ink) were changed to 92 parts by weight and 8 parts by weight, respectively.

The amount coated of the mixed resin was 26.5 g/m$^2$ after drying, the amount of the reaction product in the resin layer was 80.7% by weight, and the amount of the urethane/amino acid copolymer contained in the mixed resin layer was 8.1% by weight.

With respect to this fabric, the moisture permeability, water pressure resistance, peel strength and degree of increase of the moisture permeability with temperature were measured, and the results are shown in Table 2.

Table 1

| | 100% Modulus[*4] of PU | Amount of Reaction Product in Resin Layer Wt% | Amount[*5] of PAU in Resin Layer | Moisture Permeability[*1] | | Water Pressure Resistance ($mmH_2O$) | | Peel Strength (g/cm) | | Rate[*3] of Increase of Moisture Permeability by Temperature | Crosslinking Agent |
|---|---|---|---|---|---|---|---|---|---|---|---|
| | | | | 25°C[*2] | 40°C[*2] | before washing | after washing | warp | weft | | |
| Example 1 | 60 | 66.7 | 6.7 | 4250 | 11460 | 4400 | 4000 | 940 | 610 | 480 | added |
| Comparative Example 1 | 30 | 66.7 | 6.7 | 4650 | 10920 | 3000 | 1000 | 400 | 280 | 418 | added |
| Comparative Example 2 | - | 90.9 | 9.1 | 7200 | 11500 | 3200 | 920 | 510 | 410 | 287 | added |
| Comparative Example 3 | 60 | 11.9 | 1.2 | 2930 | 5460 | 5400 | 4100 | 1100 | 830 | 169 | added |
| Comparative Example 4 | 60 | 0 | 0 | 2310 | 5010 | 5000 | 1700 | 1300 | 950 | 186 | added |
| Comparative Example 5 | 60 | 66.7 | 6.7 | - | 11800 | 2800 | -[*6] | 130 | 140 | - | not added |

Note

*1: unit = $g/m^2$ · 24 hours

*2: relative humidity = 90%

*3: unit = $g/m^2$ · 24 hours · degree

*4: unit = $kg/cm^2$

*5: unit = % by weight

*6: measurement impossible because of peeling of film

## Table 2

| | 100% Modulus *4 of PU | Amount of Reaction Product in Resin Layer Wt% | Amount *5 of PAU in Resin Layer | Moisture Permeability *1 | | Water Pressure Resistance (mmH₂O) | | Peel Strength (g/cm) | | Rate *3 of Increase of Moisture Permeability by Temperature | Crosslinking Agent |
|---|---|---|---|---|---|---|---|---|---|---|---|
| | | | | 25°C *2 | 40°C *2 | before washing | after washing | warp | weft | | |
| Example 2 | 60 | 70 : 30 | 6.1 | 3460 | 9500 | 4200 | 3800 | 910 | 690 | 402 | added |
| Example 3 | 90 | 80 : 20 | 7.3 | 3510 | 10320 | 3030 | 2500 | 400 | 1510 | 454 | added |
| Example 4 | 60 | 85 : 15 | 7.9 | 3120 | 10730 | 3900 | 3500 | 810 | 630 | 507 | added |
| Example 5 | 60 | 30 : 70 | 2.2 | 3080 | 8800 | 5500 | 4100 | 960 | 720 | 381 | added |
| Example 6 | 60 | 50 : 50 | 4.0 | 3050 | 9100 | 4800 | 3900 | 930 | 680 | 403 | added |
| Comparative Example 6 | 60 | 92 : 8 | 8.8 | 6140 | 11050 | 2700 | 850 | 520 | 380 | 327 | added |

Note

*1: unit = g/m² . 24 hours

*2: relative humidity = 90%

*3: unit = g/m² . 24 hours . degree

*4: unit = kg/cm²

*5: unit = % by weight

According to the present invention, there is provided a coated fabric does not give a stuffy feeling or does not cling even upon movement or during work, which is comfortable even in the rain as no leakage of water occurs, and in which the initial performances are not lowered even after washing is repeatedly conducted.

Therefore, the present invention can provide a material applicable to fields where conventional waterproof moisture-permeable fabrics cannot be used because of an insufficient performance, for example, for the production of heavy duty sports wear such as mountain-climbing wear, wind breakers, ski wear, and working raincoats.

**Claims**

1. A moisture-permeable waterproof fabric having a resin layer formed on at least one surface thereof, wherein the resin layer is composed of a mixture comprising (a) a resin product obtained by reacting a urethane prepolymer having isocyanate terminals with an N-carboxyamino acid anhydride and an amine, and (b) a polyurethane having a 100% modulus of at least 40 kg/cm$^2$, said resin layer being crosslinked by an isocyanate crosslinking agent, the amount of the resin product contained in the resin layer is 12.9 to 85.3% by weight of total solid resin, and the amount of the urethane/amino acid copolymer formed during the above reaction and contained in the resin layer is 0.9 to 9.0% by weight of total solid resin.

2. A moisture-permeable waterproof fabric according to claim 1, wherein the moisture permeability is at least 8,000 g/m$^2$.24 hours and the water pressure resistance is at least 2,000 mmH$_2$O.

3. A moisture-permeable waterproof fabric according to claim 1 or 2, wherein the retention ratio of the water pressure resistance after washing is at least 80%.

4. A moisture-permeable waterproof fabric according to any preceding claim, wherein the rate of increase of the moisture permeability by the temperature is at least 200 g/m$^2$.24 hours.degree.

5. A moisture-permeable waterproof fabric according to any preceding claim, wherein the amount of the resin product is 20.0 to 72.4% by weight.

6. A moisture-permeable waterproof fabric according to claim 5, wherein the amount of the resin product is 58.5 to 72.4% by weight.

7. A moisture-permeable waterproof fabric according to any preceding claim, wherein the amount of the urethane/amino acid copolymer is 1.4 to 8.6% by weight.

8. A moisture-permeable waterproof fabric according to any preceding claim, wherein the proportion of urethane/amino acid copolymer occupying the reaction mixture is not larger than 20% by weight of total solid.

9. A process for the production of a moisture-permeable waterproof fabric, which comprises adding a solution of a polyurethane having a 100% modulus of at least 40 kg/cm$^2$ to a product solution, obtained by reacting a urethane prepolymer having isocyanate terminals with an N-carboxy amino acid anhydride and an amine, in such a proportion that the amount of the reaction product contained in the resulting resin layer is 12.9 to 85.3% by weight of total solid resin and the amount of the urethane/amino acid copolymer produced during the above reaction contained in the resulting resin layer is 0.9 to 9.0% by weight of total solid resin, further adding an isocyanate crosslinking agent to the mixture to form an organic solvent solution, coating the organic solvent solution on at least one surface of a fabric, carrying out a coagulation, removal of the solvent and drying, and subjecting the fabric to a water repellent treatment.

10. A process according to claim 9, which process includes before subjecting the fabric to a water repellent treatment, further coating an organic solvent solution of a polyurethane on the surface of the formed mixed resin layer, and carrying out a coagulation, removal of the solvent and drying.

11. A process according to claim 9 or 10, wherein the amount coated of the mixed resin after drying is adjusted to 15 to 45 g/m$^2$.

12. A process according to any one of claims 9, 10 and 11, wherein the coagulation is carried out at a temperature of 10 to 50°C.

13. A process according to any one of claims 9 to 12, wherein the removal of solvent is carried out at a temperature of 10 to 80 °C.

14. A process according to any one of claim 9 to 13, wherein the drying is carried out at a temperature of 90 to 140 °C.

**Patentansprüche**

1. Feuchtigkeitsdurchlässiges wasserabweisendes Textilmaterial, das auf mindestens einer Oberfläche eine Kunstharzschicht aufweist, wobei die Kunstharzschicht aus einer Mischung zusammengesetzt ist, welche

   (a) ein Kunstharzprodukt, welches durch Reaktion eines Urethanpräpolymers mit Isocyanat-Endgruppen mit einem N-Carboxyaminosäureanhydrid und einem Amin erhalten wurde und

   (b) ein Polyurethan mit einem 100 % Modul von mindestens 40 kg/cm$^2$,

   umfaßt, wobei die Kunstharzschicht mit einem Isocyanat-Vernetzungsreagenz vernetzt wurde, die Menge des Kunstharzproduktes in der Kunstharzschicht 12,9 bis 85,3 Gew.-% des gesamten festen Kunststoffharzes beträgt und die Menge des im Verlauf der oben genannten Reaktion gebildeten und in der Kustharzschicht enthaltenen Urethan/Aminosäure-Copolymers 0,9 bis 9,0 Gew.-% des gesamten festen Kunststoffharzes beträgt.

2. Feuchtigkeitsdurchlässiges wasserabweisendes Textilmaterial nach Anspruch 1, worin die Feuchtigkeitsdurchlässigkeit mindestens 8000 g/m$^2$ x 24 h beträgt und der Wasserdruckwiderstand mindestens 2000 mm H$_2$O beträgt.

3. Feuchtigkeitsdurchlässiges wasserabweisendes Textilmaterial nach Anspruch 1 oder 2, worin das Retentionsverhältnis des Wasserdruckwiderstands nach dem Waschen mindestens 80 % beträgt.

4. Feuchtigkeitsdurchlässiges wasserabweisendes Textilmaterial nach einem der vorangegangenen Ansprüche, worin die Zuwachsrate der Feuchtigkeitsdurchlässigkeit mittels Temperatur mindestens 200 g/m$^2$ x 24 h x Grad beträgt.

5. Feuchtigkeitsdurchlässiges wasserabweisendes Textilmaterial nach einem der vorangegangenen Ansprüche, worin die Menge des Kunstharzproduktes 20,0 bis 72,4 Gew.-% beträgt.

6. Feuchtigkeitsdurchlässiges wasserabweisendes Textilmaterial nach Anspruch 5, worin die Menge des Kunstharzproduktes 58,5 bis 72,4 Gew.-% beträgt.

7. Feuchtigkeitsdurchlässiges wasserabweisendes Textilmaterial nach einem der vorangegangenen Ansprüche, worin die Menge des Urethan/Aminosäure-Copolymers 1,4 bis 8,6 Gew.-% beträgt.

8. Feuchtigkeitsdurchlässiges wasserabweisendes Textilmaterial nach einem der vorangegangenen Ansprüche, worin der Anteil des Urethan/Aminosäure-Copolymers am Reaktionsgemisch nicht mehr als 20 Gew.-% des gesamten Feststoffs beträgt.

9. Verfahren zur Herstellung eines feuchtigkeitsdurchlässigen wasserabweisenden Textilmaterials, welches die Zugabe einer Lösung eines Polyurethans mit einem 100 % Modul von mindestens 40 kg/cm$^2$ zu einer Produktlösung, die durch Umsetzung eines Urethanpräpolymers mit Isocyanatendgruppen mit einem N-Carboxyaminosäureanhydrid und einem Amin erhalten wurde, in einem solchen Verhältnis, daß die in der resultierenden Kunstharzschicht enthaltende Menge des Reaktionsproduktes 12,9 bis 85,3 Gew.-% des gesamten festen Kunststoffharzes und die Menge des während der oben genannten Reaktion gebildeten und in der resultierenden Kunstharzschicht enthaltenen Urethan/Aminosäure-Copolymers 0,9 bis 9,0 Gew.-% des gesamten festen Kunstharzes beträgt, desweiteren Zugabe eines Isocyanat-Vernetzungsmittels zum Gemisch, um eine organische Lösungsmittel-Lösung zu bilden, Auftragen der organischen Lösungsmittel-Lösung auf wenigstens einer Oberfläche eines Textilmaterials, Durchführen einer Koagulation, Entfernung des Lösungsmittels und wasserabweisenden Behandlung des Textilmaterials umfaßt.

**10.** Verfahren nach Anspruch 9, wobei das Verfahren ein weiteres Auftragen einer organischen Lösungsmittel-Lösung eines Polyurethans auf der Oberfläche der gebildeten gemischten Kunsthartschicht, Durchführung einer Koagulation, Entfernung des Lösungsmittels und Trocknung einschließt, bevor das Textilmaterial der wasserabweisenden Behandlung unterworfen wird.

**11.** Verfahren nach Anspruch 9 oder 10, worin die aus dem gemischten Kunstharz aufgetragene Menge nach dem Trocknen auf 15 bis 45 g/m$^2$ eingestellt wird.

**12.** Verfahren nach einem der Ansprüche 9, 10 oder 11, worin die Koagulationg bei einer Temperatur von 10°C bis 50°C ausgeführt wird.

**13.** Verfahren nach einem der Ansprüche 9 bis 12, worin das Entfernen des Lösungsmittels bei einer Temperatur von 10°C bis 80°C durchgeführt wird.

**14.** Verfahren nach Anspruch 9 bis 13, worin das Trocknen bei einer Temperatur von 90 bis 140°C durchgeführt wird.

## Revendications

**1.** Tissu imperméable à l'eau et perméable à l'humidité, comportant une couche résineuse formée sur au moins une surface de celui-ci, la couche résineuse comprenant un mélange (a) d'un produit résineux obtenu en faisant réagir un pré-polymère d'uréthanne à terminaisons isocyanate, avec un anhydride N-carboxy-aminoacide et une amine et (b) d'un polyuréthanne ayant un module à 100 % d'au moins 40 kg/cm$^2$, cette couche résineuse étant réticulée à l'aide d'un agent de réticulation à groupe isocyanate, la quantité du produit résineux contenue dans la couche résineuse, étant de 12,9 à 85,3 % en poids par rapport à la totalité de résine solide, et la quantité du copolymère d'uréthanne et d'aminoacide formé au cours de la réaction ci-dessus étant contenue dans la couche résineuse à raison de 0,9 à 9,0 % en poids par rapport à la totalité de résine solide.

**2.** Tissu imperméable à l'eau et perméable à l'humidité selon la revendication 1, dans lequel la perméabilité à l'humidité est d'au moins 8 000 g/m$^2$.24 h et la résistance à la pression d'eau est d'au moins 2 000 mmH$_2$O.

**3.** Tissu imperméable à l'eau et perméable à l'humidité selon la revendication 1 ou 2, dans lequel le degré de conservation de la résistance à la pression de l'eau après lavage, est d'au moins 80 %.

**4.** Tissu imperméable à l'eau et perméable à l'humidité selon l'une quelconque des revendications précédentes, dans lequel le degré d'accroissement de la perméabilité à l'humidité en fonction de la température, est d'au moins 200 g/m$^2$.24 h.degré.

**5.** Tissu imperméable à l'eau et perméable à l'humidité selon l'une quelconque des revendications précédentes, dans lequel la quantité du produit résineux est de 20,0 à 72,4 % en poids.

**6.** Tissu imperméable à l'eau et perméable à l'humidité selon la revendication 5, dans lequel la quantité du produit résineux est de 58,5 à 72,4 % en poids.

**7.** Tissu imperméable à l'eau et perméable à l'humidité selon l'une quelconque des revendications précédentes, dans lequel la quantité du copolymère d'uréthanne et d'aminoacide, est de 1,4 à 8,6 % en poids.

**8.** Tissu imperméable à l'eau et perméable à l'humidité selon l'une quelconque des revendications précédentes, dans lequel la proportion du copolymère d'uréthanne et d'aminoacide dans le mélange réactionnel, n'est pas supérieure à 20 % en poids par rapport à la totalité de solides.

**9.** Procédé de production d'un tissu imperméable à l'eau et perméable à l'humidité, selon lequel on ajoute une solution d'un polyuréthanne ayant un module à 100 % d'au moins 40 kg/cm$^2$, dans une solution de produit obtenu en faisant réagir un pré-polymère d'uréthanne à terminaisons isocyanate, avec un anhydride d'aminoacide et une amine, selon une proportion telle que la quantité du produit de réaction contenue dans la couche résineuse résultante, soit de 12,9 à 85,3 % en poids par rapport à la totalité de résine solide, et que la quantité du copolymère d'uréthanne et d'aminoacide produit au cours de la réaction ci-dessus, contenu dans la couche résineuse résultante, soit de 0,9 à 9,0 % en poids par rapport à la totalité de résine solide, on ajoute ensuite un agent de réticulation à groupe isocyanate dans le mélange pour former une solution à base de solvant organique, on dépose la solution à base de solvant organique sur au moins une surface d'un tissu, on effectue une coagulation, on élimine le solvant et on sèche, et on soumet le tissu à un traitement hydrofugeant.

10. Procédé selon la revendication 9, dans lequel, avant de soumettre le tissu à un traitement hydrofugeant, on dépose en outre une solution à base de solvant organique d'un polyuréthanne, sur la surface de la couche résineuse mixte formée, et on effectue une coagulation, on élimine le solvant et on sèche.

11. Procédé selon la revendication 9 ou 10, dans lequel la quantité déposée de la résine mixte après séchage, est ajustée à 15 jusqu'à 45 g/m$^2$.

12. Procédé selon l'une quelconque des revendications 9, 10 et 11, dans lequel la coagulation est effectuée à une température de 10 à 50 °C.

13. Procédé selon l'une quelconque des revendications 9 à 12, dans lequel l'élimination du solvant est effectuée à une température de 10 à 80 °C.

14. Procédé selon l'une quelconque des revendications 9 à 13, dans lequel le séchage est effectué à une température de 90 à 140 °C.